(19) Europäisches Patentamt / European Patent Office / Office européen des brevets

(11) **EP 1 275 084 B1**

(12) **EUROPÄISCHE PATENTSCHRIFT**

(45) Veröffentlichungstag und Bekanntmachung des Hinweises auf die Patenterteilung:
**08.08.2007 Patentblatt 2007/32**

(21) Anmeldenummer: **01903642.5**

(22) Anmeldetag: **12.01.2001**

(51) Int Cl.:
*G06K 19/16* (2006.01) *G02B 5/18* (2006.01)

(86) Internationale Anmeldenummer:
**PCT/EP2001/000319**

(87) Internationale Veröffentlichungsnummer:
**WO 2001/080175 (25.10.2001 Gazette 2001/43)**

(54) **FLÄCHENMUSTER**

PATTERN

MOTIF DE SURFACE

(84) Benannte Vertragsstaaten:
**AT BE CH CY DE DK ES FI FR GB GR IE IT LI LU MC NL PT SE TR**
Benannte Erstreckungsstaaten:
**LV**

(30) Priorität: **15.04.2000 CH 7512000**

(43) Veröffentlichungstag der Anmeldung:
**15.01.2003 Patentblatt 2003/03**

(73) Patentinhaber: **OVD Kinegram AG**
**6301 Zug (CH)**

(72) Erfinder:
• **TOMPKIN, Wayne, Robert**
**CH-5400 Baden (CH)**
• **STAUB, René**
**CH-6332 Hagendorn (CH)**

(74) Vertreter: **LOUIS, PÖHLAU, LOHRENTZ**
**Postfach 3055**
**90014 Nürnberg (DE)**

(56) Entgegenhaltungen:
WO-A-87/07034     WO-A-98/26373
WO-A-99/38038     WO-A-99/38039
DE-A- 19 516 741

EP 1 275 084 B1

## Beschreibung

Die Erfindung bezieht sich auf ein Flächenmuster gemäss der im Oberbegriff von Anspruch 1 genannten Art.

Solche Flächenmuster weisen eine mikroskopisch feine Reliefstruktur auf und eignen sich als Sicherheitselement zur Erhöhung der Fälschungssicherheit von Wertpapieren, Ausweisen, Zahlungsmitteln und andern wertvollen Gegenständen.

Ein Flächenmuster gemäss der im Oberbegriff des Anspruchs 1 genannten Art ist aus der WO 87/07034 bekannt. Das Flächenmuster weist drei Teilflächen mit einer optisch wirksamen Beugungsstruktur auf. Diese Strukturen mit einer Spatialfrequenz f beugen sichtbares Licht entsprechend dessen Wellenlänge $\lambda$ unter verschiedenen Beugungswinkeln $\alpha$. Die Profilhöhe h der Furchen der drei Strukturen ist in jeder Teilfläche konstant, jedoch ist sie in jeder Teilfläche unterschiedlich so festgelegt, dass für einen bestimmten Beobachter die erste Struktur blaues Licht, die zweite Struktur grünes Licht und die dritte Struktur rotes Licht mit jeweils verschwindender bzw. möglichst geringer Beugungseffizienz beugt. Beim Kippen des Flächenmusters um eine zu den Furchen der Strukturen parallelen Achse wird bei einem ersten Betrachtungswinkel die erste Teilfläche, bei einem zweiten Betrachtungswinkel die zweite Teilfläche und bei einem dritten Betrachtungswinkel die dritte Teilfläche dunkel erscheinen, d.h. für den Beobachter ändert die dunkle Teilfläche beim kontinuierlichen Kippen sprunghaft ihre Lage. Die Spatialfrequenz f ist nach oben beschränkt, da der hier beschriebene optische Effekt in der ersten Beugungsordnung beobachtbar ist.

Die WO 98/26373 beschreibt ein Flächenmuster aus Beugungsgittern mit einem Hell- Dunkelmuster, dessen Ausdehnung sich mit dem Betrachtungswinkel ändert. Die Profilhöhen h der Gitter ändern sich entsprechend einer Modulationsfunktion. Die Spatialfrequenzen f sind so gewählt, dass wenigstens eine erste Beugungsordnung auftritt.

Die EP-0 712 012 A1 beschreibt ein Flächenmuster, das ein Element mit einer mit einem Lack überzogenen Beugungsstruktur mit einer Spatialfrequenz f von mehr als 2000 Linien/mm enthält. Es wird darauf hingewiesen, dass für solche Spatialfrequenzen wegen der Totalreflexion an der Lack - Luft - Grenzschicht sichtbares, an der Beugungsstruktur gebeugtes Licht auch in der ersten Beugungsordnung in der Lackschicht gefangen bleibt. Die Beugungsstruktur wird mittels eines anisotropen Ätzverfahrens durch eine Maske hindurch erzeugt. Die Profilhöhen h hängen von der Grösse der Öffnungen in der Maske bzw. vom Tastverhältnis der transparenten und opaken Flächen ab und sind wegen des Ätzverfahrens nur statistisch festgelegt. Wegen Unwägbarkeiten des Ätzvorgangs kann ein vorgegebenes Muster nicht genau in die Beugungsstruktur umgesetzt werden. Eine holographische Kopie der Beugungsstruktur weist ein ähnliches Beugungsverhalten wie das Original auf, das - weil selbst ungenau definiert - sich für den Laien kaum von der Kopie unterscheidet.

Andererseits sind aus EP-0 105'099 B1, EP-0'330'738 B1 und EP-0'375'833 B1 Flächenmuster aus mosaikartig zusammengesetzten Teilflächen mit verschiedenen Beugungsstrukturen bekannt, die abhängig vom Kipp- und/oder Drehwinkel sichtbar sind und eine Abfolge von Mustern oder Bilder zeigen. Die beugungsoptisch wirkenden Flächenmuster sind zwischen Lagen aus transparenten Kunststoffen eingebettet (CH-PS 678'835).

Der Erfindung liegt die Aufgabe zugrunde, eine fälschungs- und kopiersichere Beugungsstruktur zu schaffen, die aufgrund hoher Spatialfrequenz ein eindeutig erkennbares Muster zeigt.

Die Lösung der Aufgabe gelingt mit den kennzeichnenden Merkmalen von Anspruch 1. Vorteilhafte Ausgestaltungen ergeben sich aus den abhängigen Ansprüchen. Nachfolgend werden Ausführungsbeispiele der Erfindung anhand der Zeichnung näher erläutert.

Es zeigen:

Figur 1    ein Laminat im Querschnitt,
Figur 2    ein schematisch unterteiltes Flächenmuster,
Figur 3    das einfache Flächenmuster,
Figur 4    ein Profil einer Reliefstruktur,
Figur 5    das Profil mit einer andern Hüllkurve,
Figur 6    das Profil mit der Hüllkurve mit einem konstanten Term K,
Figur 7    das Profil im Bereich kleiner Profilhöhen,
Figur 8a    ein Areal im Bereich kleiner Profilhöhen,
Figur 8b    das Areal unter einer anderen Blickrichtung,
Figur 9    Hüllkurven,
Figur 10    die Hüllkurvenfläche für ein Schachbrettmuster,
Figur 11    symmetrische und asymmetrische Profile und
Figur 12    längs einer Richtung sich ändernde Profilform.

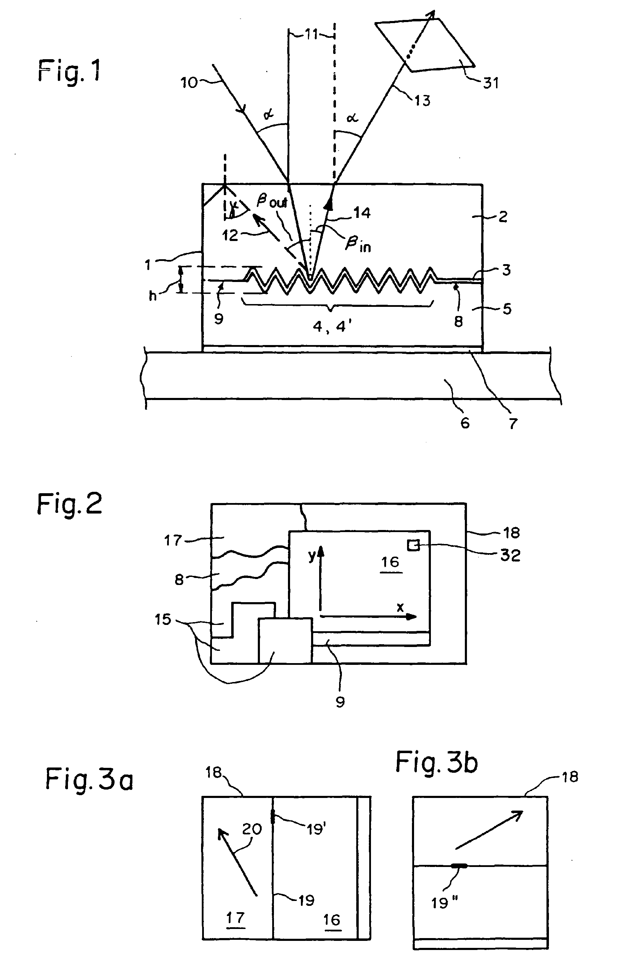

In der Figur 1 bedeuten 1 ein Laminat, 2 eine transparente Deckschicht aus einem Polymer, 3 eine Reflexionsschicht, 4 eine mikroskopische Reliefstruktur, 5 eine Schutzschicht aus einem Polymer und 6 ein Substrat. Die von der Reflexionsschicht 3 abgewandte Oberfläche der Schutzschicht 5 ist entweder mit einer Klebeschicht 7 bedeckt oder die Schutzschicht selbst erfüllt die Funktion des Klebers. Als Klebemittel sind Kalt- oder Heisskleber geeignet, die Wahl hängt von der Anwendung ab. Die mikroskopische Reliefstruktur 4 ist in die Deckschicht 2 eingeformt und mit der Reflexionsschicht 3 bedeckt, während die nicht strukturierten Flächenteile 8 und 9 als Spiegelflächen 8 mit der Reflexionsschicht 3 bedeckt sind oder als transparente Fenster 9 frei von der Reflexionsschicht 3 bleiben. Durch die Fenster 9 hindurch sind entweder die Schutzschicht 5 erkennbar oder, wenn die Schutzschicht 5 auch transparent ist, Indicia des Substrats 6 unter dem Laminat 1 sichtbar.

Die mikroskopische Reliefstruktur 4 ist ein optisch wirksames Gitter mit parallelen geraden oder gekrümmten Furchen und weist wenigstens lokal eine periodische Struktur auf, die durch ihre Parameter beschrieben ist. Die wichtigsten Parameter sind ein Azimutwinkel relativ zu einer ausgezeichneten Richtung, eine Spatialfrequenz f bzw. eine Anzahl Furchen pro Millimeter, eine Reliefprofilform, eine Profilhöhe h. Die geometrische Profilhöhe $h_G$ innerhalb der mikroskopischen Reliefstruktur 4 ist nicht mit der optisch wirksamen Profilhöhe h zu verwechseln. Füllt das Material der Deckschicht 2 mit dem Brechungsindex n die Furchen der Reliefstruktur 4 auf, wird als Profilhöhe h die mit dem Brechungsindex n multiplizierte geometrische Profilhöhe $h_G$ optisch wirksam. Im Folgenden bedeutet die Profilhöhe h immer die optisch wirksame Profilhöhe h.

Die vom menschlichen Auge wahrgenommen Wellenlängen überdecken einen Bereich von 380 nm (violett) bis 780 nm (rot).

Ein auf die mikroskopische Reliefstruktur 4 unter einem Winkel $\alpha$ auf das Laminat 1 einfallender Lichtstrahl 10 wird an der Reflexionsschicht 3 teilweise reflektiert und gebeugt. Da die Deckschicht 2 einen typischen Brechungsindex von n = 1.5 aufweist, wird der einfallende Lichtstrahl 10 zu einem Lot 11 auf die Oberfläche der Deckschicht 2 hin gebrochen, bevor er auf die mikroskopische Reliefstruktur 4 auftrifft und gebeugt wird. Das gebeugte Licht 12 verlässt entsprechend der Beugungsordnung die mikroskopische Reliefstruktur 4, wobei der reflektierte Lichtstrahl 14 in der nullten Beugungsordnung in Richtung 13 des gespiegelten Lichts das Laminat 1 verlässt. Die übrigen Beugungsordnungen schliessen zusätzliche Winkel $\beta$ zum reflektierten Lichtstrahl 14 ein, wobei diese zusätzliche Winkel $\beta$ durch die Funktion $\sin\beta = m\cdot\lambda\cdot f + \sin(\beta_{IN})$ gegeben sind vorausgesetzt, dass m die Zahl der Beugungsordnung, $\lambda$ die Wellenlänge des einfallenden Lichtstrahls 10 und f die Spatialfrequenz der Reliefstruktur 4 bedeuten. Sobald das gebeugte Licht 12 unter einem Winkel $\gamma$ von mehr als $\arcsin(1/n)$ auf die Grenzfläche der Deckschicht 2 zur Luft auftrifft, wird das gebeugte Licht 12 total reflektiert und tritt erst nach mehreren Reflexionen in nicht mehr definierbaren Richtungen aus dem Laminat 1 aus. Sobald aber das Produkt aus einer Grenzwellenlänge $\lambda_G$ und der Spatialfrequenz f grösser oder gleich 1 ist, tritt keine Beugung mehr auf. Die Grenzwellenlänge $\lambda_G$ hängt von der für die Beobachtung vorgesehenen Lichtquelle ab. Falls eine Beobachtung bei Tageslicht vorgesehen ist, wird mit Vorteil die Grenzwellenlänge $\lambda_G$ im violetten Teil des sichtbaren Spektrums gewählt, beispielsweise $\lambda_G$ = 380 nm. Dies bestimmt die minimale Spatialfrequenz f zu 2'630 Perioden pro mm.

Hingegen wird sehr wohl Licht an der Reflexionsschicht 3 gespiegelt, wobei Höhenunterschiede innerhalb der mikroskopischen Reliefstruktur 4 Weglängendifferenzen und damit Phasenunterschiede zwischen den an benachbarten Punkten reflektierten Lichtstrahlen 14 verursachen. Die Interferenz zwischen den reflektierten Lichtstrahlen 14 mit den Phasenunterschieden beeinflusst die Intensität des Lichts in Abhängigkeit von der Wellenlänge $\lambda$. Aus dem weissen Licht werden somit das Licht bestimmter Wellenlängen $\lambda$ verstärkt, reduziert oder gar ausgelöscht. Die mikroskopische Reliefstruktur 4 bei der keine Beugung mehr auftritt sondern nur noch die Wirkung der Interferenz in der nullten Beugungsordnung beobachtbar ist, wird als "zero order microstructure" oder ZOM bezeichnet. Im folgenden sind die mikroskopischen Reliefstrukturen 4, welche die Bedingung $\lambda\cdot f \geq 1$ erfüllen, ZOM - Strukturen 4' genannt. Eine Fläche, die mit der ZOM - Struktur 4' belegt ist und eine über die Fläche konstante Profilhöhe h aufweist, erscheint bei einer Beleuchtung des Laminats 1 mit weissem Licht in einem aus einer Richtung einfallenden Lichtstrahl 10 in der durch die Profilhöhe h und dem Material der Reflexionsschicht 3 bestimmten Farbe oder Grauwert. Beim Kippen der Fläche um eine Achse in der Ebene der Fläche hingegen verändert sich die optisch wirksame Profilhöhe h und damit die Farbe, der Farbton oder der Grauwert. Bei einer normalen, diffusen Beleuchtung fällt das einfallende Licht 10 aus dem ganzen Halbraum über dem Laminat 1 auf die mikroskopische Reliefstruktur 4 ein und verlässt das Laminat in der gleichen Verteilung in den Halbraum. Bei ausgewählten ZOM - Strukturen 4' erblickt ein Beobachter die Fläche in einer vom Kippwinkel jedoch nicht vom Azimut abhängigen Farbe. Die ZOM - Strukturen 4' mit einem Rechteckprofil fallen durch satte Farben auf und sind auch aus der Natur bekannt, ein Beispiel dafür sind die farbigen Flügel von Schmetterlingen der Familie Morphus.

Die ZOM - Struktur 4' weist einen Linienabstand 1/f auf, der kleiner als die Wellenlänge $\lambda$ des sichtbaren Lichts ist. Die Skalartheorie kann nicht einmal qualitativ das Beugungsverhalten der ZOM - Struktur 4' beschreiben nur eine Anwendung der exakten elektromagnetischen Theorie und genaue Berechnungen, wie sie im Buch "Electromagnetic Theory of Gratings" von R. Petit, Herausgeber, Springerverlag, Heidelberg 1980 beschrieben sind. Demnach versagt die Skalartheorie, weil das Verhalten des Lichts entsprechend der TE- und TM-Polarisation völlig verschieden ist.

Im Falle der TE - Polarisation, bei der das elektrische Feld parallel zu den Furchen der ZOM - Struktur 4' ausgerichtet ist, fliessen Oberflächenströme so in der Reflexionsschicht 3, dass die ZOM - Struktur 4' wie ein Spiegel wirken kann und das Licht in der Richtung des reflektierten Strahls 14 zurückwirft. Heuristisch gesagt, dringt das TE - Feld nicht in die ZOM - Struktur ein und erfährt die Wirkung der ZOM - Struktur nicht. Eine ZOM -Struktur 4' in Metall mit einer Profilhöhe h zwischen 0 und 350 nm oder mehr weist eine ziemlich konstante Reflektivität ungeachtet der Profilhöhe h auf.

Im Falle der TM - Polarisation, bei der das elektrische Feld senkrecht zu den Furchen der ZOM - Struktur 4' ausgerichtet ist, können die Oberflächenströme in der Reflexionsschicht 3 nicht so leicht erzeugt werden. Das TM - Feld kann in die Tiefe der ZOM - Struktur vordringen und wird dort erst reflektiert. Das Ergebnis ist, dass im Bereich der Profilhöhe h von 0 bis etwa 350 nm die Reflektivität der ZOM - Struktur 4' in Metall im wesentlichen mit zunehmender Profilhöhe h abnimmt.

Im Gegensatz zu den üblichen Beugungsstrukturen mit der Bedingung $\lambda \cdot f < 1$ ist die unter einer bestimmten Beobachtungsbedingung wahrnehmbare Farbe der ZOM - Strukturen 4' nicht von den Beugungsgleichungen abgeleitet werden. Die Farbe der ZOM - Strukturen 4' hängt von den Materialien, der Profilform, die Profilhöhe h, der Orientierung usw. ab und ist im allgemeinen keine Spektralfarbe. Beim Einsatz von metallischen Reflexionsschichten 3 scheinen bei der Beleuchtung der ZOM - Strukturen 4' mit weissem Licht graue oder metallische Farbtöne auf. Mit gekreuzten Gittern kann die Bildung von Oberflächenströmen unterdrückt werden, wobei die ZOM - Strukturen 4' nur noch wenig Licht reflektiert. Eine solche ZOM - Struktur 4' mit einer metallischen Reflexionsschicht 3 erscheint schwarz von allen Blickwinkeln. Dielektrische Reflexionsschichten 3 verhalten sich verschieden. Bei einer Drehung um das Lot 11 zeigt die ZOM -Struktur 4' mit der dielektrischen Reflexionsschicht 3 vom Azimut abhängige Farbänderungen oder Farbschattierungen.

Der Vorteil dieser ZOM - Strukturen 4' mit $\lambda \cdot f \geq 1$ liegt darin, dass unabhängig von den Beobachtungsbedingungen der Beobachter immer eine farbige oder grau getönte Fläche erblickt, ganz im Gegensatz zu einem Mosaik aus Teilflächen mit den bekannten Beugungsgittern, wie sie in den eingangs genannten Dokumenten EP-0 105'099 B1, EP-0'330'738 B1 und EP-0'375'833 B1 beschrieben sind.

Weist die mikroskopische Reliefstruktur 4 keine periodische Struktur auf und hat aber Abmessungen, die grösser sind als die Wellenlänge $\lambda$ des einfallenden Lichts, tritt keine Beugung auf; jedoch wird das Licht gestreut. Mittels einer entsprechenden Profilform wird das Licht in eine bevorzugte Richtung gestreut. Eine streuende Teilfläche ohne bevorzugte Richtung erscheint dem Beobachter unabhängig vom Azimut als graue Fläche; eine streuende Teilfläche mit einer bevorzugten Richtung wird abhängig von der Beobachtungsrichtung als helle oder als dunkle Fläche wahrgenommen.

Die Figur 2 zeigt ein in mehrere Flächenteile 8, 9, 15, 16, 17 unterteiltes Flächenmuster 18. Die beugungsoptischen Flächen 15 weisen Gitterstrukturen mit der Bedingung $\lambda \cdot f < 1$ auf und unterscheiden sich wenigstens im Azimut und in der Spatialfrequenz f. In einem von Koordinaten x und y aufgespannten Areal 16 erfüllt hingegen die mikroskopische Reliefstruktur 4 die Bedingung $\lambda \cdot f \geq 1$. Für den Beobachter entsteht durch die nebeneinander angeordneten Flächenteile 8, 9, 15, 16, 17 eine auffällige Wechselwirkung bedingt durch das völlig andere optische Verhalten beim Kippen und Drehen der Spiegelflächen 8, der Fenster 9, der beugungsoptischen Flächen 15, des Areals 16 mit der ZOM - Struktur 4' (Fig. 1) und streuenden Flächenteilen 17. Im Flächenmuster 18 dienen die Areale 16 beispielsweise als Referenzflächen für die beugungsoptischen Flächen 15 oder umgekehrt, während sich die streuenden Flächenteile 17 für registergenaue Markierungen eignen.

In der Figur 3a umfasst die einfachste Ausführung des Flächenmusters 18 wenigstens das streuende Flächenteil 17 und das Areal 16, die mit Vorteil mit einer gemeinsamen Berandung 19 nebeneinander angeordnet sind. Die ZOM -Struktur 4' (Fig. 1) im Areal 16 ist eine Sinusfunktion mit einer metallischen Reflexionsschicht 3 (Fig. 1) und einer Profilhöhe h (Fig. 1), die sich von h = 0 bis etwa h = 300 nm auf einer Strecke von mehreren Millimetern monoton entlang der Berandung 19 ändert. Das streuende Flächenteil 17 weist auch bei diffuser Beleuchtung eine Vorzugsrichtung 20 so auf, dass der streuende Flächenteil 17 durch Drehen und Kippen des Flächenmusters 18 um seine drei Achsen einen bestimmen Grauwert erreicht, damit an einer Stelle 19' der Berandung 19 die ZOM - Struktur 4' und das streuende Flächenteil 17 denselben Grauwert aufweisen und der Kontrast an der Stelle 19' verschwindet. Nach einer, z.B. in der Figur 3b dargestellten, azimutalen Drehung des Flächenmusters 18 haben sich die Grauwerte oder metallische Farbtöne in beiden Flächenteilen 16 und 17 für den Beobachter verändert, so dass der Kontrast an einer anderen Stelle 19" der Berandung verschwindet. Weist eine lokal langsam variierende Profilhöhe h im Areal 16 auf, ergeben sich Merkmale, die schwer zu kopieren und doch leicht von einem Beobachter zu verifizieren sind.

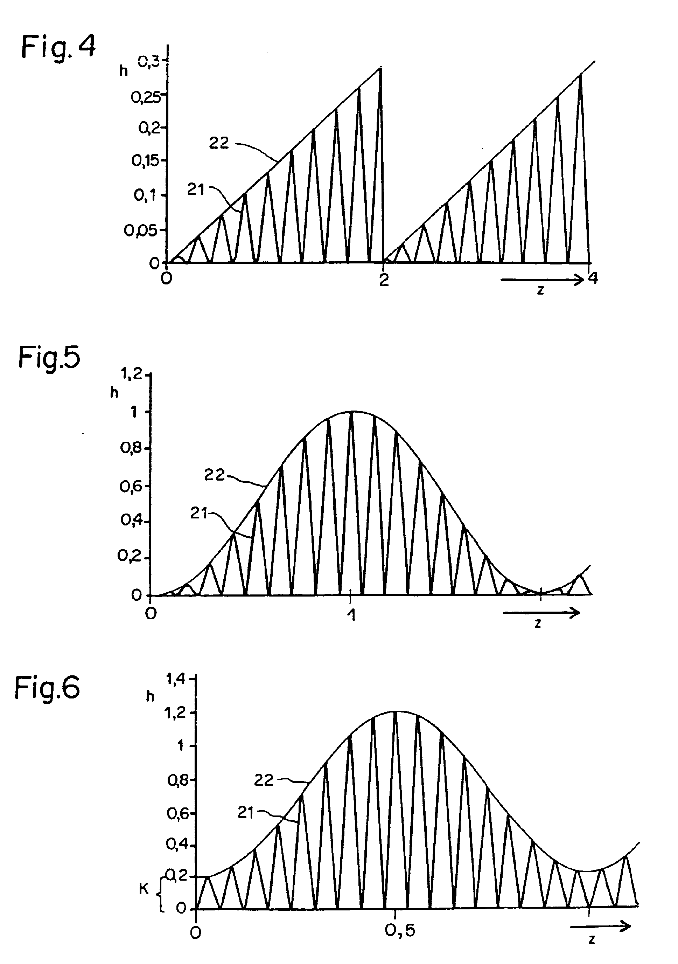

In der Figur 4 ist ein Profil 21 S(z) der ZOM - Struktur 4' (Fig. 1) gezeigt. Das Profil 21 basiert auf einer sinusförmigen Gitterstruktur $G(z) = 0.5 \cdot A \cdot [1 + \sin(2\pi fz)]$ mit der Amplitude A. Die Profilhöhe h der Gitterstruktur ist mit einer Funktion H(z) moduliert. Die Profilhöhe h ändert sich innerhalb des Areals 16 (Fig. 3) längs einer ausgezeichneten Richtung z, beispielsweise mit einer linearen Funktion H(z). Die ausgezeichnete Richtung z ist zum Beispiel parallel zum Gittervektor der Gitterstruktur G(z) ausgerichtet. Eine Hüllkurve 22, d.h. die Funktion H(z), weist beispielsweise eine periodische Sägezahnform auf und ist aus mehreren linearen Teilstücken, wo die Funktion H Werte der Profilhöhe h zwischen h = 0 nm und einem Maximum annimmt, zusammengesetzt. Die ZOM - Struktur 4' weist somit das Profil 21 der Funktion $S(z) = G(z) \cdot H(z)$ auf. Ein Sonderfall dieser Funktion ist gegeben, wenn die Funktion in einem Areal 16 nur die Werte einer einzigen Periode auf dem Weg z zwischen einem Randstück des Areals 16 zu einem gegenüberliegenden Randstück des Areals 16 annimmt.

Die Figur 5 zeigt ein anderes Profil 21 der ZOM - Struktur 4' (Fig. 1), bei der die sinusförmige Gitterstruktur G (z) = 0.5•A•[1 + sin(2πfz)] mit der Hüllkurve 22 der Funktion H(z) = $sin^2$(2πFz) moduliert ist, wobei F die Frequenz der Hüllkurve 22 bezeichnet. Das Profil 21 nimmt die Werte der Funktion S(z) = 0.5•A•[1 + sin(2πfz)]• $sin^2$(2πFz) an.

In der Figur 6 ist eine Funktion H(z) der Profilhöhe h gezeigt, die einen konstanten additiven Term K aufweist. Dargestellt ist die Hüllkurve 22 der Funktion H(z) = $sin^2$(2πFz) + 200 nm. Das Profil 21 der ZOM - Struktur 4' (Fig. 1) erreicht im Areal 16 (Fig. 3) nur die minimale Profilhöhe K = 200 nm. Diese minimale Profilhöhe K ist aus dem Bereich 0 < K < 300 nm gewählt. Jede denkbare für die Modulation der Gitterstruktur G(z) geeignete Funktion kann einen solchen additiven Term K aufweisen. Die minimale Profilhöhe K im Bereich von wenigstens 50 nm besser 100 nm bis 200 nm verhindert das Auftreten von Orten ohne ausreichendes Profil. Die Orte ohne ausreichendes Profil spiegeln das ganze Spektrum des einfallenden Lichts. Das Areal 16 mit einer derartigen ZOM - Struktur 4' weist Gebiete mit verschiedenen Farben auf, die den unterschiedlichen Interferenzbedingungen entsprechen. In den Bereichen mit der Profilhöhe h = K fehlen z.B. die Blauanteile während mit zunehmender Profilhöhe h immer langwelligeres Licht ausgeblendet wird, z.B. Grün bei h ≈ 250 nm bis 300 nm, so dass ein Beobachter eine Purpurfarbe erblickt.

Generell ist für eine gute Beobachtbarkeit des Flächenmusters 18 (Fig. 2) eine langsame Aenderung der Profilhöhe h in der ausgezeichneten Richtung z notwendig, d.h. die Frequenz F ist viel kleiner als die Spatialfrequenz f zu wählen, wobei zweckmäßig die Spatialfrequenz f grösser als f = 2400 Perioden/mm und die Frequenz F aus dem Bereich F < 5 Perioden/mm zu wählen sind. In den Zeichnungen der Figuren 5 bis 7 mit den Profilen 21 und den Hüllkurven 22 umfasst eine Periode der Hüllkurve 22 aus darstellerischen Gründen nur wenige Perioden des Profils 21 der ZOM - Struktur 4'. In diesen Beispielen sind die Profilhöhe h in Mikrometern und die Strecken in Richtung z in Millimetern angegeben. In Wirklichkeit ist daher die Spatialfrequenz f des Profils 21 um ein Vielfaches höher als die Frequenz F der Hüllkurve 22, d.h. die Profilhöhe h ändert sich in Abhängigkeit des Ortes (x, y) bis auf einzelne Unstetigkeiten sehr langsam. Im mit Tageslicht beleuchteten Areal 16 (Fig. 2) mit der ZOM - Struktur 4' nimmt der Beobachter einen Farb- oder Grauwert wahr, der sich entsprechend dem örtlichen Wert der Hüllkurve 22 einstellt. Die Periodizität der Hüllkurve 22 erzeugt somit ein periodisches Muster mit der Frequenz F. Damit das Muster ohne Hilfsmittel gut zu erkennen ist, erstreckt sich die Periode der Hüllkurve 22 wenigstens über 0.2 mm. Eine einzige Periode der Hüllkurve 22 enthält für jeden Millimeter längs einer Wegstrecke in der ausgezeichneten Richtung z die von der Spatialfrequenz f angegebene Anzahl Perioden des Profils 21.

Wie oben ausgeführt weisen die ZOM - Strukturen 4' eine starke, polarisierende Wirkung auf. Beim Betrachten der ZOM - Struktur 4' in polarisiertem Licht oder beim Betrachten durch ein Polarisationsfilter 31 (Fig. 1) und einer Beleuchtung in unpolarisiertem Licht ist das durch die wechselnden Profilhöhen und/oder Profilformen erzeugte Muster im Areal 16 in einem erhöhten Kontrast oder ausgeprägteren Farben sichtbar, wenn durch Drehen des Polarisationsfilters 31 die reflektierte TE - Komponente des Lichts eliminiert ist. Beispielsweise weisen Arealteile 32 (Fig. 2) innerhalb des Areals 16 solche ZOM - Strukturen (4') auf, die sich nur durch ein unterschiedliches Polarisationsvermögen von der ZOM - Struktur (4') des als Hintergrundfläche dienenden, restlichen Areals 16 unterscheiden. Bilden die Arealteile 32 einen Information tragenden Code, z.B. in Form eines Strichcodes, ist der Code in unpolarisiert einfallendem Licht 10 (Fig. 1) nicht sichtbar, da kein Kontrast zwischen den Arealteilen 32 und der Hintergrundfläche des Areals 16 vorhanden ist. Erst bei Beleuchtung mit polarisiertem Licht 10 entsteht genügend Kontrast, um die Arealteile 32 des Codes zu erkennen. Diese Codes eignen sich für eine maschinelle Erkennung. Anstelle eines Codes ist die durch eine Vielzahl der Arealteile 32 gebildete Information ein Schriftbild, ein graphisches Emblem oder ein Bild. Die Information ist in einer Ausführung mit einem feinen Raster aus den Arealteilen 32 in das Areal 16 eingebracht, wobei sogar Graustufen eines Bildes mittels entsprechenden Abstufungen der Rasterdichte wiedergegeben sind.

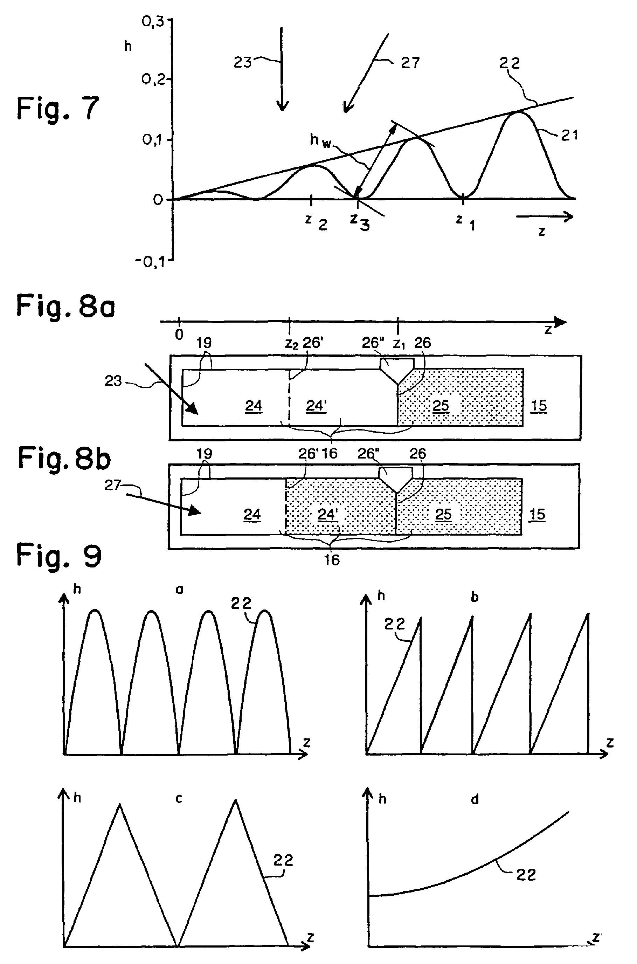

Erreicht in einem Teil des Areals 16 die Profilhöhe h nur einen Wert im Bereich 0 bis 80 nm, ist das Profil 21 in diesem Teil des Areals 16 zu wenig ausgeprägt, um beugungswirksam zu sein. Dieser Teil des Areals 16 spiegelt daher das einfallende Licht 10 in Abhängigkeit von der Beobachtungsbedingungen. In den Figuren 7, 8a und 8b ist an einem einfachen Beispiel die Anwendung der niederfrequenten Modulation der Profilhöhe h für die Gestaltung des Flächenmusters 18 verdeutlicht. Die Figur 7 zeigt schematisch das Profil 21 im Übergangsgebiet vom Spiegel zur wirksamen Interferenzstruktur in einem Querschnitt durch die ZOM - Struktur 4' (Fig.1). Sie erstreckt sich senkrecht zur ausgezeichneten Richtung z, wie dies in Draufsicht auf das Areal 16 der Figuren 8a und 8b dargestellt ist. Das Areal 16 grenzt mit einem Teil seiner Berandung 19 an einen anderen Flächenteil, z.B. an die beugungsoptische Fläche 15. Schaut der Beobachter in der Figur 8a im wesentlichen senkrecht auf die Zeichenebene in der Beobachtungsrichtung 23 auf die ZOM - Struktur 4' (Fig. 1) ist auf einer Strecke von z = 0 bis z = $z_1$ die durch die Hüllkurve 22 (Fig. 7) gegebene Profilhöhe h zu klein, als dass das TM - polarisierte Licht merkbar geschwächt wird. In der Figur 8a wirken daher ein Teilareal 24 und ein Zwischenareal 24' des Areals 16 wie ein Spiegel, während ein Gebiet 25 des Areals 16 für Interferenzfarben genügend grosse Profilhöhen h aufweist und, das Gebiet 25 wie oben ausgeführt, farbig oder in einem Grauton bzw. Mischfarbe erscheint. In der Zeichnung der Figuren 8a und 8b ist dies durch einen Punktraster zeichnerisch verdeutlicht. Die Profilhöhe h im Gebiet 25 erreicht an der Grenze 26 zum Zwischenareal 24' wenigstens 80 bis 100 nm, d.h. aus dem weissen Licht werden dort z.B. die Blauanteile ausgelöscht. Kippt der Beobachter das Flächenmuster 18 (Fig. 2) mit der ZOM - Struktur 4'(Fig. 1) um eine Achse parallel zu den Furchen des Profils 21 (Fig. 7) in eine Schieflage, bemerkt er, dass sich das Gebiet 25 auf Kosten des Zwischenareals 24' ausdehnt, sich der Uebergang zwischen Spiegel und Interferenzfarben von der Grenze 26 von $z = z_1$ nach $z = z_2$ zur punktierten Linie 26' verschiebt und z.B. das Teilareal 24 erreicht. Der Beobachter schaut nun aus einer Blickrichtung 27 schief auf das Profil 21. In der Figur 7 bewirkt dies eine Vergrösserung der Profilhöhe h zur wirksamen Profilhöhe $h_w$, so dass diese Interferenzeffekte auch im Zwischenareal 24' (Fig. 8b) bereits bei $z = z_2$ auftreten. Das hier gezeigte Modell der Profilhöhe h ist nur ein heuristisches; den echten Sachverhalt bei Submikronstrukturen kann das Modell nicht richtig wiedergeben.

Das oben beschriebene Beispiel ist in den Figuren 8a und 8b gezeigt. Im Zwischenareal 24' steigt die Profilhöhe h der ZOM - Struktur 4' von höchstens 50 nm an der Linie 26' auf wenigstens 80 nm bis 100 nm an der Grenze 26 zum Gebiet 25 an. Im spiegelnden Teilareal 24 ist die Profilhöhe h = 50 nm oder weniger. Im Gebiet 25 ist die Profilhöhe h wenigstens 80 nm bis 100 nm oder mehr. Schaut in der Figur 8a der Beobachter in Richtung des Pfeils, der Beobachtungsrichtung 23, spiegelt nicht nur das Teilareal 24 sondern auch das Zwischenareal 24', da die Profilhöhe h im Zwischenareal 24' zu klein ist. Beim Kippen des Flächenmusters 18 (Fig. 2) unter Berücksichtigung der Reflexionsbedingung in die Blickrichtung 27 fällt das Licht 10 (Fig. 1) schiefer auf das Flächenmuster 18 (Fig. 2) ein und vergrössert die Profilhöhe h, z. B. am Ort $z_3$ (Fig. 7), zur wirksamen Profilhöhe hw (Fig. 7). Im Zwischenareal 24' wirkt sich diese Vergrösserung der Profilhöhe h dadurch aus, dass sich während des Kippens der Uebergang von spiegelnder zur farbigen Reflexion im Zwischenareal 24' von der Grenze 26 zur Linie 26' hin verschiebt. Die für den Beobachter wahrnehmbaren Abmessungen der Elemente 24,24',25 des Musters sind scheinbar von der Betrachtungsrichtung 23, 27 abhängig; diese Muster mit den spiegelnden Teilflächen 24, 24' und den sich verschiebenden Uebergängen von spiegelnder zur farbigen Reflexion gehört in die Gruppe der Moiré Muster. Beim Drehen des Areals 16 um das Lot 11 (Fig. 1) bleibt das Moiré Muster immer sichtbar, im Gegensatz zu den Flächenteilen 15 mit Licht beugenden Reliefstrukturen 4 (Fig. 1).

Das Moiré Muster im Sicherheitsmerkmal bildet ein zusätzliches Hindernis gegen Versuche, holographisch erzeugte Kopien dieses Sicherheitsmerkmals mit Moiré Muster herzustellen. In die bekannten Flächenmuster 18 (Fig. 2) der eingangs genannten Art lässt sich das Moiré Muster problemlos integrieren.

Mit Vorteil weist das Areal 16 beispielsweise eine Markierfläche 26'' am Ort z.B. der maximalen Ausdehnung der spiegelnden Teilflächen 24, 24' auf, um die Verschiebung der Grenze 26 in Richtung der punktierten Linie 26' leicht zu erkennen. Die Markierfläche 26'' ist mit beugenden, absorbierenden oder streuenden Strukturen belegt, die beispielsweise aufleuchten oder gut sichtbar sind, wenn sich im Zwischenareal 24' der Uebergang von spiegelnder zur farbigen Reflexion an der Grenze 26 und/oder am Ort der punktierten Linie 26' befindet.

Für die Gitterstruktur G(z) eignen sich nicht nur die oben als Beispiel verwendete Sinusfunktion sondern auch andere trigonometrische Funktionen, wie $\sin^b(2\pi f z)$ mit b= 2, 3, 4, 5, ... oder andere periodische Funktionen wie Zykloide, Rechteckfunktionen, Dreiecksfunktionen. Besonders zu erwähnen sind die aus diesen Funktionen gebildeten Kreuzgitter. Vor allem für tiefe Strukturen eignet sich eine Funktion $\sin^{b(z)}(2\pi f z)$ bei der b(z) eine stückweise stetige Funktion ist.

Die modulierende Hüllkurve 22 des Profils 21 bestimmt die beobachtbaren Muster im Areal 16. Neben den oben beschriebenen Funktionen sind auch die geraden trigonometrischen Funktionen $\sin^b(2\pi F z)$ mit b= 2, 4 ... und die in den Figuren 9a bis 9d gezeigten verwendbar. In der Figur 9a ist die Funktion $H(z) = |\sin(2\pi F z)|$, in der Figur 9b und 9c lineare periodische Funktionen H(z) und in der Figur 9d eine nicht periodische, parabolische Funktion H(z) dargestellt. Die Profilhöhen h sind willkürlich gewählt, daher ist die Ordinate in den Figuren 9 nicht skaliert.

Die Profile 21 und die Hüllkurven 22 erstrecken sich senkrecht zur Zeichenebene der Figuren 4 bis 7 und 9 zwischen den Berandungen 19 des Areals 16.

Ganz allgemein ist das Profil 21 der ZOM - Strukturen 4', S(x, y), durch eine Modulation der hochfrequenten Gitterstruktur G(x, y) mit einer sich über mehrere 1000 Perioden der Gitterstruktur G(x, y) zwischen einem minimalen und einem maximalen Wert ändernden modulierenden Funktion H(x, y) der Profilhöhe h erzeugt: S(x, y) = G(x, y)•H(x, y), wobei mit den Koordinaten x und y ein Ort im Areal 16 bezeichnet wird.

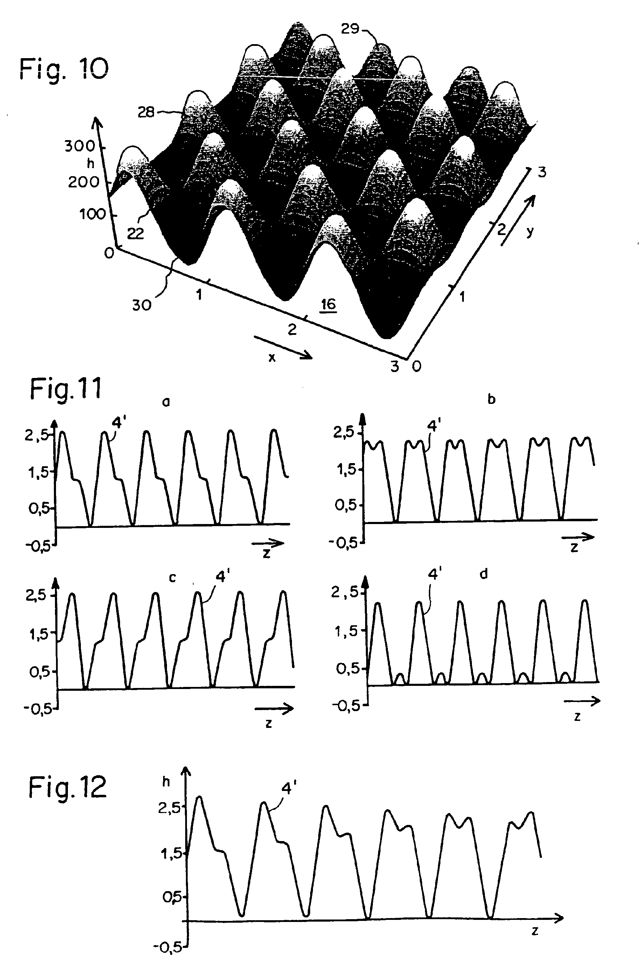

Beispielhaft ist in der Figur 10 eine Hüllkurvenfläche 28 gezeigt, die in ihrer Form an einen Eierkarton erinnert. Die Hüllkurvenfläche 28 enthält alle Hüllkurven 22 im Areal 16 und bestimmt die Profilhöhe h an jedem Ort, die durch die Koordinaten x, y festgelegt ist. Die bezeichnete Hüllkurve 22 weist die Funktion H(x, y = 0) auf. Die Hüllkurvenfläche 28 ist durch die Funktion

$$H(x, y) = \sin(2\pi F x) \cdot \sin(2\pi F y) + K \text{ (Fig. 6)}$$

beschrieben und moduliert beispielsweise die Gitterstruktur

$$G(x, y) = 0.5 \cdot A \cdot [1 + \sin(2\pi f x)] \cdot [1 + \sin(2\pi f y)],$$

so dass die ZOM - Struktur 4' (Fig.1) die Funktion

$$S(x, y) = 0.5 \cdot A \cdot [1 + \sin(2\pi f x)] \cdot [1 + \sin(2\pi f y)] \cdot \sin(2\pi F x) \cdot \sin(2\pi F y) + K$$

hat. Diese ZOM - Struktur 4' besteht aus feinen, regelmässig angeordneten Nadeln, deren Länge durch die Hüllkurvenfläche 28 bestimmt ist. Bei diffuser Beleuchtung wird ein schachbrettartiges Moiré Muster sichtbar, wobei Hügel 29 sich farblich und/oder in den Grauwerten von Tälern 30 abheben. Auch hier verändern sich die Farben und Grauwerte beim Kippen des Areals 16, nicht jedoch beim Drehen des Areals 16 um das Lot 11. Wenn der Term K < 50 nm ist, spiegeln die Böden der Täler 30. Die Verschiebung des Uebergangs von spiegelnder zur farbigen Reflexion beim Kippen des Areals 16 ist im Bereich der Abhänge der Hüllkurvenfläche 28 auch im schachbrettartigen Moiré-Muster zu beobachten.

In einer anderen Ausführung weist die ZOM - Struktur 4' ein Relief mit dem Profil 21 (Fig. 4) gemäss der Funktion S(x, y) auf, wobei S(x, y) eine additive Überlagerung zweier periodischer Funktionen G1 (x, y) und G2(x, y) ist. Die Funktion G1 (x, y) ist sinusförmig, besitzt die Amplitude A und bestimmt die Spatialfrequenz f der ZOM - Struktur 4'. Die zweite Funktion G2(x, y, θ) ist die erste Harmonische zu G1 (x, y) und weist die Amplitude A/2 auf. Die Funktion G2(x, y, θ) ist um eine Phase θ gegenüber der Funktion G1 (x, y) verschoben. In der allgemeinen Form ist

$$S(x, y) = G1(x, y) + G2(x, y).$$

In der ausgezeichneten Richtung z lautet die Funktion S der ZOM - Struktur 4'

$$S(z) = A \cdot \{[1 + \sin(2\pi f z)] + 0.5 \cdot [1 + \sin(4\pi f z + \theta)]\}.$$

In den Figuren 11 a bis 11 d und 12 ist das Profil 21 (Fig. 7) als Funktion längs der Richtung z dargestellt, wobei die Ordinate h in willkürlichen Einheiten skaliert ist. Der Wert der Phasenverschiebung θ bestimmt, ob die ZOM - Struktur 4' symmetrisch, dargestellt in den Figuren 11 b und 11 d (für θ = 90° bzw. 270°), oder asymmetrisch, dargestellt in den Figuren 11 a und 11 c (für θ = 0° bzw. 180°) ist. Die Gittervektoren der Funktionen G1 (x, y) und G2(x, y) sind parallel oder schliessen einen Winkel mit einem absoluten Betrag von weniger als 10° ein.

Die Phasenverschiebung θ ist in einer anderen Ausführung der ZOM - Struktur 4' eine periodische oder wenigstens eine stückweise stetige Funktion θ(x, y) des Ortes im Areal 16 (Fig. 10). Die Funktion θ(x, y) ändert sich sehr langsam im Vergleich zur Spatialfrequenz f in der Richtung z, beispielsweise im Bereich 90°/mm bis 720°/mm. Die Funktion θ(x, y) moduliert die Profilform der ZOM - Struktur 4' und hat eine mit der Funktion der Hüllkurve 22 (Fig. 5) vergleichbare Wirkung. Die Figur 12 zeigt eine lokale Veränderung der Kurvenform der ZOM - Struktur 4' als Funktion der ausgezeichneten Richtung z. Bei der periodischen Funktion θ(x, y) ändert sich die Phasenverschiebung θ um 360° über eine Anzahl von N Perioden der ZOM - Struktur 4' mit der Spatialfrequenz f. Das bei der Beleuchtung der ZOM - Struktur 4' entstehende Muster wiederholt sich somit in Abständen von N/f mm.

Der Bereich der erreichbaren Profilhöhen h für ZOM - Strukturen 4' hängt von der Spatialfrequenz f ab, da eine kostengünstige Vervielfältigung, d.h. ein Replizieren der ZOM - Struktur 4' in die Deckschicht 2 (Fig. 1) umso schwieriger wird, je höher die Spatialfrequenz f ist. Die heute herstellbaren Profilhöhen h bewegen sich im Bereich h = 0,5/f bis 4/f. Bei einer Spatialfrequenz von f = 3000 Perioden/mm liegen die Profilhöhen h im Bereich 150 nm bis 1200 nm. Typische Werte für die Profilhöhen h liegen zwischen 200 nm und 400 nm bei einer Spatialfrequenz f von 3000 Perioden/mm.

Die Beobachtungsbedingung für den Beobachter verändert sich, wenn das Flächenmuster 18 (Fig. 2) um eine Achse in der Ebene des Flächenmusters 18 gekippt oder um das Lot 11 (Fig. 1) gedreht wird. Ebenso beeinflusst die Qualität des einfallenden Lichts, Farbe, Polarisation usw., oder ein Betrachten des Flächenmusters 18 durch ein Polarisationsfilter 31 (Fig. 1) hindurch und eine Drehung des Polarisationsfilters 31 die Beobachtungsbedingung.

**Patentansprüche**

1.  Flächenmuster (18) mit einem visuell sichtbaren Mosaik aus einer Anzahl von Flächenteilen (8; 9; 15; 16; 17), eingebettet in einem Laminat (1) aus wenigstens einer transparenten Deckschicht (2) und einer Schutzschicht (5), wobei die einen Flächenteile als transparente Fenster (9) und die anderen, wenigstens teilweise mit einer Reflexionsschicht (3) überzogenen Flächenteile (8; 15; 16; 17) als Spiegelflächen (8), als beugungsoptische Flächen (15, 16) mit mikroskopischen Reliefstrukturen (4; 4') und als einfallende Lichtstrahlen (10) streuende Flächenteile (17) ausgebildet sind
**dadurch gekennzeichnet,**
**dass** eine Grenzwellenlänge ($\lambda_G$) die kürzeste gerade noch sichtbare Wellenlänge im Spektrum der Lichtquelle ist,
**dass** wenigstens in einer der beugungsoptischen Flächen (15; 16), in einem von Koordinaten x und y aufgespannten Areal (16), die mikroskopische Reliefstruktur (4') eine Spatialfrequenz (f) derart aufweist, dass das Produkt (P) aus der Grenzwellenlänge ($\lambda_G$) und der Spatialfrequenz (f) grösser oder gleich eins ist, so dass die mikroskopische Reliefstruktur für die Grenzwellenlänge ($\lambda_G$) als Zero Order Microstructure {= ZOM-Struktur (4')} ausgebildet ist, welche nur noch die Wirkung der Interferenz in der nullten Beugungsordnung aufweist,
**dass** in den anderen beugungsoptischen Flächen (15) die Spatialfrequenzen (f) der anderen mikroskopischen Reliefstrukturen (4) die Bedingung, das Produkt (P) ist kleiner als eins, erfüllen,
**dass** in jedem durch die Koordinaten (x, y) festgelegten Ort im Areal (16) eine Profilhöhe (h) der ZOM-Struktur (4') optisch wirksam ist, wobei eine Gitterstruktur (G{x, y}) der ZOM-Struktur (4') mittels einer Hüllkurvenfläche (28; H{x, y}) mit einer niedrigen Frequenz (F) moduliert ist, wobei die Frequenz (F) weniger als fünf Perioden pro Millimeter beträgt.

**2.** Flächenmuster (18) nach Anspruch 1,
**dadurch gekennzeichnet,**
**dass** die Hüllkurvenfläche (28; H{x, y}) Werte für die Profilhöhe (h) aus dem Bereich 0 nm bis zu einem maximalen Wert, der zwischen 150 nm und 1200 nm liegt, bestimmt und dass das Areal (16) mit der ZOM-Struktur (4') spiegelnde Teilareale (24; 24') aufweist.

**3.** Flächenmuster (18) nach Anspruch 1,
**dadurch gekennzeichnet,**
**dass** die Hüllkurvenfläche (28; H{x, y}) Werte für die Profilhöhe (h) einen zusätzlichen konstanten Term mit einem Wert K aus dem Bereich 50 nm bis 200 nm aufweist, dass die Hüllkurvenfläche (28; H{x, y}) Werte für die Profilhöhe (h) aus dem Bereich zwischen dem Wert K bis zu einem maximalen Wert, der höher als 150 nm aber niedriger als 1200 nm ist, annimmt und dass das Areal (16) mit der ZOM-Struktur (4') keine spiegelnden Teilareale (24; 24') besitzt.

**4.** Flächenmuster (18) nach Anspruch 2 oder 3,
**dadurch gekennzeichnet,**
**dass** die Hüllkurvenfläche (28; H{x, y}) eine periodische trigonometrische Funktion ist.

**5.** Flächenmuster (18) nach einem der Ansprüche 1 bis 4,
**dadurch gekennzeichnet**,
das die Hüllkurvenfläche (28; H{x, y}) eine periodische, aus linearen Teilstücken zusammengesetzte Funktion ist.

**6.** Flächenmuster (18) nach einem der Ansprüche 1 bis 5,
**dadurch gekennzeichnet,**
**dass** die zweidimensionale Hüllkurvenfläche (28; H{x, y}) längs einer ausgezeichneten Richtung (z) eine eindimensionale Funktion (H{z}) derart ist, dass im reflektierten Licht (14) das Areal (16) ein streifenförmiges Farb- und/oder Grauwerte-Muster aufweist.

**7.** Flächenmuster (18) nach einem der Ansprüche 1 bis 5,
**dadurch gekennzeichnet,**
**dass** die zweidimensionale Hüllkurvenfläche (28; H{x, y}) ein Produkt aus der Teilfunktion (H1), die sich nur in Richtung der einen Koordinate (x) ändert, und der Teilfunktion (H2), die sich nur in Richtung der anderen Koordinate (y) ändert, dergestalt ist, dass im reflektierten Licht (14) das Areal (16) ein schachbrettartiges, regelmässiges Farb- und/oder Grauwerte-Muster aufweist.

**8.** Flächenmuster (18) nach Anspruch 6 oder 7,
**dadurch gekennzeichnet,**
**dass** die Abmessungen der Farb- und/oder Grauwerte des Musters von den Beobachtungsbedingungen abhängig und durch Kippen um eine Achse in der Ebene des Areals (16) veränderbar sind.

**9.** Flächenmuster (18) nach einem der Ansprüche 1 bis 8,
**dadurch gekennzeichnet,**
**dass** eine Periode der Hüllkurvenfläche (28; H{x, y}) eine Anzahl von M Perioden der ZOM-Struktur (4') mit der Spatialfrequenz (f) umfasst und dass sich das Muster in einem Abstand von M/f mm wiederholt.

10. Flächenmuster (18) nach einem der vorhergehenden Ansprüche,
**dadurch gekennzeichnet,**
**dass** die Gitterstruktur (G{x, y}) proportional zur Funktion $\sin^{b(z)}(2\pi f z)$ ist, wobei b(z) wenigstens eine stückweise stetige Funktion in einer ausgezeichneten Richtung (z) in dem von den Koordinaten (x; y) aufgespannten Areal (16) ist.

11. Flächenmuster (18) nach Anspruch 1,
**dadurch gekennzeichnet,**
**dass** in jedem durch die Koordinaten (x; y) festgelegten Ort im Areal (16) eine Profilhöhe (h) der ZOM-Struktur (4') optisch wirksam ist, dass die ZOM-Struktur (4') eine additive Überlagerung einer ersten periodischen Funktion (G1) und einer zweiten periodischen Funktion (G2) ist, wobei die erste Funktion (G1) mit einer Amplitude (A) die Spatialfrequenz (f) der ZOM-Struktur (4') bestimmt und die zweite Funktion (G2) die erste Harmonische zur ersten Funktion (G1) mit der halben Amplitude (a) ist und wobei die zweite Funktion (G2) um eine Phase (θ) gegenüber der ersten Funktion (G1) verschoben ist, und dass sich sowohl die beiden Funktionen (G1; G2) als auch die Phase (θ) von den Koordinaten (x; y) abhängige Funktionen sind.

12. Flächenmuster (18) nach Anspruch 11,
**dadurch gekennzeichnet,**
**dass** die Phase (θ) eine periodische Funktion ist, dass eine Periode der Phase (θ) eine Anzahl von N Perioden der ZOM-Struktur (4') mit der Spatialfrequenz (f) umfasst und dass sich das Relief der ZOM-Struktur (4) in einem Abstand von N/f mm wiederholt.

13. Flächenmuster (18) nach Anspruch 11,
**dadurch gekennzeichnet,**
**dass** sich die Phase (θ) längs einer ausgezeichneten Richtung (z) in dem von den Koordinaten (x; y) aufgespannten Areal (16) mit einer Geschwindigkeit von 90° pro Millimeter bis 720° pro Millimeter ändert.

14. Flächenmuster (18) nach Anspruch 11,
**dadurch gekennzeichnet,**
**dass** die Gittervektoren der beiden Funktionen (G1; G2) einen Winkel mit einem absoluten Betrag von weniger als 10° einschliessen.

15. Flächenmuster (18) nach einem der vorhergehenden Ansprüche,
**dadurch gekennzeichnet,**
**dass** die vorbestimmte Grenzwellenlänge ($\lambda_G$) die kürzeste, gerade noch sichtbare Wellenlänge ($\lambda$) ist.

16. Flächenmuster (18) nach einem der vorhergehenden Ansprüche,
**dadurch gekennzeichnet,**
**dass** ein Areal (16) mit einer ZOM-Struktur (4') längs einer Strecke eine gemeinsame Berandung (19) mit einer der anderen beugungsoptischen Flächen (15) aufweist.

17. Flächenmuster (18) nach einem der vorhergehenden Ansprüche,
**dadurch gekennzeichnet,**
**dass** Arealteile (32) im Areal (16) eine Information bilden und dass sich die ZOM-Strukturen (4') der Arealteile (32) nur durch ein unterschiedliches Polarisationsvermögen für die einfallenden Lichtstrahlen (10) von der ZOM-Struktur (4') des übrigen Areals (16) unterscheiden.

18. Flächenmuster (18) nach einem der vorhergehenden Ansprüche,
**dadurch gekennzeichnet,**
**dass** eine die einfallenden Lichtstrahlen (10) beugende oder streuende Markierfläche (26") am Areal (16) angrenzend so angeordnet ist, dass in einer vorbestimmten Beobachtungsrichtung (23) die Markierfläche (26") den Ort einer Grenze bezeichnet, bei der in einem Farb- und/oder Grauwerte-Muster der ZOM-Struktur (4') die spiegelnde zur farbigen Reflexion wechselt, und dass bei anderen Beobachtungsbedingungen der Übergang von spiegelnder zur farbigen Reflexion gegenüber der Markierfläche (26") verschoben ist.

19. Flächenmuster (18) nach einem der Ansprüche 1 bis 18,

**dadurch gekennzeichnet,**
**dass** die Lichtquelle Tageslicht ist und die Grenzwellenlänge ($\lambda_G$) die kürzeste gerade noch sichtbare Wellenlänge von 380 nm aufweist.

**Claims**

1. Surface pattern (18) having a visually visible mosaic comprising a number of surface parts (8; 9; 15; 16; 17), embedded in a laminate (1) comprising at least one transparent cover layer (2) and a protective layer (5), some surface parts being formed as transparent windows (9) and the other surface parts (8; 15; 16; 17), which are at least partly coated with a reflection layer (3), being formed as mirror surfaces (8), as diffraction-optical surfaces (15 and 16) having microscopic relief structures (4; 4') and as surface parts (17) that scatter incident light beams (10),
**characterized**
**in that** a limit wavelength ($\lambda_G$) is the shortest wavelength that is still just visible in the spectrum of the light source,
**in that** at least in one of the diffraction-optical surfaces (15; 16), in an area (16) spanned by coordinates x and y, the microscopic relief structure (4') has a spatial frequency (f) in such a way that the product (P) of the limit wavelength ($\lambda_G$) and the spatial frequency (f) is greater than or equal to one such that the microscopic relief structure, for the limit wavelength ($\lambda_G$), is formed as a zero order microstructure {= ZOM structure (4')}, which only has the effect of the interference in the zeroth order of diffraction,
**in that** in the other diffraction-optical surfaces (15), the spatial frequencies (f) of the other microscopic relief structures (4) meet the condition that product (P) is less than one,
**in that** a profile height (h) of the ZOM structure (4') is optically effective in each location defined by the coordinates (x, y) in the area (16), a grating structure (G{x, y}) of the ZOM structure (4') being modulated by means of an envelope area (28; H{x, y}) with a low frequency (F), the frequency (F) being less than five periods per millimetre.

2. Surface pattern (18) according to Claim 1,
**characterized**
**in that** the envelope area (28; H{x, y}) determines values for the profile height (h) from the range 0 nm up to a maximum value lying between 150 nm and 1200 nm, and in that the area (16) with the ZOM structure (4') has reflective partial area (24; 24').

3. Surface pattern (18) according to Claim 1,
**characterized**
**in that** the envelope area (28; H{x, y}) has values for the profile height (h) with an additional constant term having a value K from the range 50 nm to 200 nm, in that the envelope area (28; H{x, y}) assumes values for the profile height (h) from the range between the value K up to a maximum value that is higher than 150 nm but lower than 1200 nm, and in that the area (16) with the ZOM structure (4') has no reflective partial areas (24; 24').

4. Surface pattern (18) according to Claim 2 or 3,
**characterized**
**in that** the envelope area (28; H{x, y}) is a periodic trigonometrical function.

5. Surface pattern (18) according to one of Claims 1 to 4,
**characterized**
**in that** the envelope area (28; H{x, y}) is a periodic function composed of linear segments.

6. Surface pattern (18) according to one of Claims 1 to 5,
**characterized**
**in that** the two-dimensional envelope area (28; H{x, y}), along a distinguished direction (z), is a one-dimensional function (H{z}) in such a way that in the reflected light (14) the area (16) has a strip-shaped colour and/or grey-scale value pattern.

7. Surface pattern (18) according to one of Claims 1 to 5,
**characterized**
**in that** the two-dimensional envelope area (28; H{x, y}) is a product of the partial function (H1) that changes only in the direction of one coordinate (x) and the partial function (H2) that changes only in the direction of the other coordinate (y), in such a way that in the reflected light (14) the area (16) has a chequered regular colour and/or grey-scale value pattern.

**8.** Surface pattern (18) according to Claim 6 or 7,
**characterized**
**in that** the dimensions of the colour and/or grey-scale values of the pattern are dependent on the observation conditions and can be altered by tilting about an axis in the plane of the area (16).

**9.** Surface pattern (18) according to one of Claims 1 to 8,
**characterized**
**in that** a period of the envelope area (28; H{x, y}) comprises a number of M periods of the ZOM structure (4') with the spatial frequency (f), and in that the pattern is repeated at a distance of M/f mm.

**10.** Surface pattern (18) according to one of the preceding claims,
**characterized**
**in that** the grating structure (G{x, y}) is proportional to the function $\sin^{b(z)}(2\pi fz)$, where b(z) is at least one piecewise continuous function in a distinguished direction (z) in the area (16) spanned by the coordinates (x; y).

**11.** Surface pattern (18) according to Claim 1,
**characterized**
**in that** a profile height (h) of the ZOM structure (4') is optically effective in each location defined by the coordinates (x; y) in the area (16), in that the ZOM structure (4') is an additive superposition of a first periodic function (G1) and a second periodic function (G2), the first function (G1) with an amplitude (A) determining the spacial frequency (f) of the ZOM structure (4') and the second function (G2) being the first harmonic with respect to the first function (G1) with half the amplitude (a), and the second function (G2) being shifted by a phase (θ) relative to the first function (G1), and in that both the two functions (G1; G2) and the phase (θ) are functions dependent on the coordinates (x; y).

**12.** Surface pattern (18) according to Claim 11,
**characterized**
**in that** the phase (θ) is a periodic function, in that a period of the phase (θ) comprises a number of N periods of the ZOM structure (4') with the spatial frequency (f), and in that the relief of the ZOM structure (4) is repeated at a distance of N/f mm.

**13.** Surface pattern (18) according to Claim 11,
**characterized**
**in that** the phase (θ) changes along a distinguished direction (z) in the area (16) spanned by the coordinates (x; y) at a rate of 90° per millimetre to 720° per millimetre.

**14.** Surface pattern (18) according to Claim 11,
**characterized**
**in that** the grating vectors of the two functions (G1; G2) form an angle having an absolute magnitude of less than 10°.

**15.** Surface pattern (18) according to one of the preceding claims,
**characterized**
**in that** the predetermined limit wavelength ($\lambda_G$) is the shortest wavelength ($\lambda$) that is just still visible.

**16.** Surface pattern (18) according to one of the preceding claims,
**characterized**
**in that** an area (16) with a ZOM structure (4') has, along a path, a common boundary (19) with one of the other diffraction-optical surfaces (15).

**17.** Surface pattern (18) according to one of the preceding claims,
**characterized**
**in that** area parts (32) in the area (16) form an item of information, and in that the ZOM structures (4') of the area parts (32) differ from the ZOM structure (4') of the rest of the area (16) only by virtue of a different polarization capability for the incident light beams (10).

**18.** Surface pattern (18) according to one of the preceding claims,
**characterized**
**in that** a marking surface (26'') that diffracts or scatters the incident light beams (10) is arranged in a manner adjoining the area (16) such that, in a predetermined observation direction (23), the marking surface (26") designates the location of a boundary at which, in a colour and/or grey-scale pattern of the ZOM structure (4'), the specular reflection changes to the coloured reflection, and that under other observation conditions, the transition from specular to coloured reflection is shifted relative to the marking surface (26'').

19. Surface pattern (18) according to one of Claims 1 to 18,
**characterized**
**in that** the light source is daylight and the limit wavelength ($\lambda_G$) is the shortest wavelength that is just still visible of 380 nm.

**Revendications**

1. Motif de surface (18) avec une mosaïque observable visuellement composée d'un certain nombre de parties plates (8 ; 9 ; 15 ; 16 ; 17), insérées dans un stratifié. (1) composé d'au moins une couche de finition transparente (2) et d'une couche de protection (5), une partie des parties plates étant conçues en tant que fenêtres transparentes (9) et une autre partie de pièces plates (8 ; 15; 16 ; 17), au moins partiellement revêtues d'une couche de réflexion (3), étant conçues en tant que surfaces spéculaires (8), en tant que surfaces optiques à courbure (15, 16) à structures microscopiques en relief (4 ; 4') et en tant que portions plates (17) diffractant la lumière incidente (10),
**caractérisé**
**en ce qu'**une longueur d'onde limite ($\lambda_G$) est la longueur d'onde la plus courte précisément encore visible dans le spectre de la source lumineuse,
**en ce que**, dans au moins une des surfaces optiques à courbure (15 ; 16), dans une zone (16) s'étendant entre les coordonnées x et y, la structure microscopique en relief (4') présente une fréquence spatiale (f) telle que le produit (P) de la longueur d'onde limite ($\lambda_G$) et de la fréquence spatiale (f) est supérieur ou égal à un, si bien que la structure microscopique en relief pour la longueur d'onde limite ($\lambda_G$) est conçue en tant que Microstucture d'Ordre Zéro {= structure MOZ (4')}, laquelle ne présente plus que l'action d'interférence dans l'ordre de courbure zéro,
**en ce que**, dans les autres surfaces optiques à courbure (15), la fréquence spatiale (f) des autres structures microscopiques en relief (4) remplit la condition selon laquelle le produit (P) est inférieur à un,
**en ce que**, dans chaque endroit dans la zone (16), fixé par les coordonnées (x, y), une hauteur de profil (h) de la structure MOZ (4') est active du point de vue optique, une structure en réseau (G(x, y)) de la structure MOZ (4') étant modulée à l'aide d'une surface enveloppante (28 ; H{x, y}) avec une fréquence faible (F), la fréquence (F) étant de moins de cinq périodes par millimètre.

2. Motif de surface (18) selon la revendication 1,
**caractérisé**
**en ce que** la surface enveloppante (28 ; H{x, y}) détermine des valeurs pour la hauteur de profil (h) dans le domaine de 0 nm jusqu'à une valeur maximale, qui se situe entre 150 nm et 1200 nm, et en ce que la zone (16) avec la structure MOZ (4') présente des zones partielles spéculaires (24 ; 24').

3. Motif de surface (18) selon la revendication 1,
**caractérisé**
**en ce que** la surface enveloppante (28 ; H{x, y}) présente des valeurs pour la hauteur de profil (h) avec un terme supplémentaire constant K dans le domaine de 50 nm à 200 nm, en ce que la surface enveloppante (28 ; H{x, y}) prend des valeurs pour la hauteur de profil (h) dans le domaine compris entre la valeur K jusqu'à une valeur maximale, qui se situe au-delà de 150 nm mais qui est à moins de 1200 nm, et en ce que la zone (16) avec la structure MOZ (4') ne possède aucune surface spéculaire partielle (24 ; 24').

4. Motif de surface (18) selon la revendication 2 ou 3,
**caractérisé**
**en ce que** la surface enveloppante (28 ; H(x, y}) est une fonction périodique trigonométrique.

5. Motif de surface (18) selon l'une quelconque des revendications 1 à 4,
**caractérisé**
**en ce que** la surface enveloppante (28 ; H{x, y}) est une fonction périodique, composée de portions partielles linéaires.

6. Motif de surface (18) selon l'une quelconque des revendications 1 à 5,
**caractérisé**

**en ce que** la surface enveloppante bidimensionnelle (28 ; H{x, y}) est, le long d'une direction remarquable (z), une fonction unidimensionnelle (H{z}), de telle sorte que, dans la lumière réfléchie (14), la zone (16) présente un motif de valeurs colorées et/ou de valeurs grises sous forme de ruban.

7. Motif de surface (18) selon l'une quelconque des revendications 1 à 5,
**caractérisé**
**en ce que** la surface enveloppante bidimensionnelle (28; H{x, y}) est un produit de la fonction partielle (H1), qui ne se modifie qu'en direction d'une des coordonnées (x), et de la fonction partielle (H2), qui ne se modifie qu'en direction de l'autre coordonnée (y), réalisé de telle sorte que, dans la lumière réfléchie (14), la zone (16) présente un motif régulier de valeurs colorées et/ou de valeurs grises, sous forme d'échiquier.

8. Motif de surface (18) selon la revendication 6 ou 7,
**caractérisé**
**en ce que** les dimensions des valeurs colorées et/ou de valeurs grises du motif dépendent des conditions d'observation et peuvent être modifiées par un basculement autour d'un axe du plan de la zone (16).

9. Motif de surface (18) selon l'une quelconque des revendications 1 à 8,
**caractérisé**
**en ce qu'**une période de la surface enveloppante (28 ; H{x, y}) comprend un nombre de périodes M de la structure MOZ (4') avec la fréquence spatiale (f) et en ce que le motif est répété à raison d'un intervalle de M/f mm.

10. Motif de surface (18) selon l'une quelconque des revendications précédentes,
**caractérisé**
**en ce que** la structure en réseau (G{x, y}) est proportionnelle à la fonction $\sin^{b(z)}(2\pi fz)$, b(z) étant au moins un fonction constante par sections dans une direction remarquable (z) dans la zone (16) sous-tendue par les coordonnées (x ; y).

11. Motif de surface (18) selon la revendication 1,
**caractérisé**
**en ce que**, dans chaque emplacement dans la zone (16), fixé par les coordonnées (x ; y), une hauteur de profil (h) de la structure MOZ (4') est active du point de vue optique, en ce que la structure MOZ (4') est une superposition additive d'une première fonction périodique (G1) et d'une deuxième fonction périodique (G2), la première fonction (G1) ayant une amplitude (A) déterminant la fréquence spatiale (f) de la structure MOZ (4') et le deuxième fonction (G2) étant la première harmonique par rapport à la première fonction (G1) avec une amplitude moitié (a) et la deuxième fonction (G2) étant décalée d'une phase ($\theta$) par rapport à la première fonction (G1), et en ce que non seulement les deux fonctions (G1; G2), mais aussi la phase ($\theta$) sont des fonctions qui dépendent des coordonnées (x ; y).

12. Motif de surface (18) selon la revendication 11,
**caractérisé**
**en ce que** la phase ($\theta$) est une fonction périodique, en ce qu'une période de la phase ($\theta$) comprend un certain nombre de périodes N de la structure MOZ (4') avec la fréquence spatiale (f) et en ce que le relief de la structure MOZ (4') se répète à un intervalle de N/f mm.

13. Motif de surface (18) selon la revendication 11,
**caractérisé**
**en ce que** la phase ($\theta$) se modifie le long d'une direction remarquable (z) dans la zone (16) sous-tendue par les coordonnées (x ; y) avec une vitesse allant de 90° par millimètre à 720° par millimètre.

14. Motif de surface (18) selon la revendication 11,
**caractérisé**
**en ce que** les vecteurs de réseau des deux fonctions (G1; G2) incluent un angle ayant une valeur absolue de moins de 10°.

15. Motif de surface (18) selon l'une quelconque des revendications précédentes,
**caractérisé**
**en ce que** la longueur d'onde limite prédéterminée ($\lambda_G$) est la longueur d'onde ($\lambda$) la plus courte, tout juste encore visible.

**16.** Motif de surface (18) selon l'une quelconque des revendications précédentes, **caractérisé en ce que** la zone (16) avec une structure MOZ (4') présente, le long d'un trajet, un contour commun (19) avec une des autres surfaces optiques à courbure (15).

**17.** Motif de surface (18) selon l'une quelconque des revendications précédentes, **caractérisé en ce que** des portions de zone (32) dans la zone (16) forment une information et en ce que les structures MOZ (4') des portions de zone (32) ne se différentient que par un pouvoir de polarisation différent pour les rayons lumineux incidents (10) de la structure MOZ (4') de la zone restante (16).

**18.** Motif de surface (18) selon l'une quelconque des revendications précédentes, **caractérisé en ce qu'**une surface de marquage (26") infléchissant ou diffractant les rayons lumineux incidents (10) sur la zone (16) est disposée d'une manière adjacente de telle sorte que, dans une direction d'observation prédéterminée (23), la surface de marquage (26") désigne la position d'une limite à laquelle, dans un motif de valeurs colorées et/ou de valeurs grises de la structure MOZ (4'), la réflexion passe d'une réflexion spéculaire à une réflexion colorée et de telle sorte, dans le cas d'autres conditions d'observation, la transition de la réflexion spéculaire à la réflexion colorée est décalée par rapport à la surface de marquage (26").

**19.** Motif de surface (18) selon l'une quelconque des revendications 1 à 18, **caractérisé en ce que** la source lumineuse est la lumière du jour et en ce que la longueur d'onde limite ($\lambda_G$) présente la longueur d'onde la plus courte précisément encore visible de 380 nm.

Fig.1

Fig.2

Fig.3a

Fig.3b

Fig.4

Fig.5

Fig.6

**Fig. 7**

**Fig. 8a**

**Fig. 8b**

**Fig. 9**

Fig. 10

Fig.11

Fig.12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 8707034 A
- WO 9826373 A
- EP 0712012 A1
- EP 0105099 B1
- EP 0330738 B1
- EP 0375833 B1
- CH 678835